# EUROPEAN PATENT APPLICATION

(11) **EP 2 131 361 A1**
(43) Date of publication of application: **09.12.2009**
(21) Application number: 08157428.7
(22) Date of filing: 02.06.2008
(51) Int. Cl.: G11B 23/40, G11B 7/007

(54) **Method for providing an optical recording medium with an identification mark**

(71) Applicant: Deutsche Thomson OHG, 30625 Hannover (DE)
(72) Inventor: Keesen, Heinz-Werner, 30173 Hannover (DE); Schmidt-Uhlig, Thomas, 37130 Gleichen (DE); Thies, Stephan, 30519 Hannover (DE)
(74) Representative: Schmidt-Uhlig, Thomas

(57) **Abstract**

The present invention is directed to a method and an apparatus (19) for providing an optical recording medium (1) having a label side (6) and a data access side (7) with an identification mark (9) readable with an optical pickup of an apparatus for reading from and/or writing to optical recording media (1). According to the invention, the identification mark (9) is applied to the label side (6) and/or to the data access side (7) as a pattern detectable by a light beam (12) from the data access side (7).

## Description

The present invention is directed to a method and an apparatus for providing an optical recording medium with an identification mark readable with an optical pickup of an apparatus for reading from and/or writing to optical recording media, and to an optical recording medium comprising such an identification mark. The present invention further relates to a method for reading out the identification mark on the optical recording medium, and to an apparatus for reading from and/or writing to optical recording media implementing such method.

Today's optical recording media usually are provided with a serial number in the Burst Cutting Area. The Burst Cutting Area (BCA) is an annular area within the disk hub where a bar code can be written for additional information. The BCA data are located in a recorded layer of the optical recording medium. For example, for DVD-ROM the BCA is specified in Standard ECMA-267: 120 mm DVD - Read-Only Disk. Also high-density optical recording media such as the BluRay disk include a BCA, as described for example in WO 2005/050650 and US 2007/0011591.

Currently mainly two approaches are known for providing an optical recording medium with BCA data. According to first approach, which is described in US 2006/0274617, the BCA data are written during mastering. For this purpose a stamper including the BCA data is used in the molding process of the optical recording medium. This means, however, that the BCA data are common for all optical recording media produced with the same master.

A further, more common approach is to write the BCA data to the finished optical recording medium using a high power laser, e.g. a YAG laser. This approach is described, for example, in US 6,885,629. The laser cuts the BCA data into the reflective layer of the finished optical recording medium. Though this solution allows to write individual BCA data to each optical recording medium, it is a relatively complex and time consuming process. The document further discloses to print a barcode onto the optical recording medium with an ink-jet printer. This barcode is detected by a special barcode reader.

It is an object of the present invention to propose an alternative solution for providing an optical recording medium having a label side and a data access side with an identification mark, which is readable with an optical pickup of an apparatus for reading from and/or writing to optical recording media.

According to the present invention, a method for providing an optical recording medium having a label side and a data access side with an identification mark includes the step of applying the identification mark to the label side and/or to the data access side as a pattern detectable by a light beam from the data access side.

Likewise, an apparatus for providing an optical recording medium having a label side and a data access side with an identification mark is adapted to apply the identification mark to the label side and/or to the data access side as a pattern detectable by a light beam from the data access side.

An optical recording medium according to the present invention, with a label side and a data access side, has an identification mark on the label side and/or on the data access side. The identification mark is detectable by a light beam from the data access side.

Currently for DVDs the BCA data is located below the 0.6mm cover layer of the DVD, which makes this known solution relatively secure against manipulation. However, the production of individualized BCA data is quite complex. Applying an identification mark, e.g. in the form of BCA data, to the label side or the data access side simplifies the generation of individualized identification marks such as a serial number or additional information. Compared to the high power laser used in the prior art, less expensive and faster tools can be used for applying the identification mark to the optical recording medium. The identification mark is favorably applied onto the BCA or the Lead-in or Lead-out area. In order to ensure a reliable access to the identification mark, no reflective layer or only a semi-reflective layer is present between the data access side and the identification mark in the area of the identification mark.

Preferably, the identification mark is applied to the label side or the data access side by printing the pattern, e.g. with a label printer. Alternatively, a pre-printed label is applied to the optical recording medium by a label application unit. In order to prevent manipulation of the identification mark, the printer is advantageously able to print fine details, which cannot easily be falsified. Security against removal of the printed information is preferably achieved by ensuring that each apparatus for reading from and/or writing to optical recording media requires to find such information on the optical recording medium. Further security is achieved when special inks are used for printing, e.g. fluorescent inks.

According to an alternative solution, the identification mark is applied to the label side or the data access side by removing portions of a reflective layer from the label side or the data access side. This is possible, for example, by a mechanical pressing or scratching step, or by optically modifying a special light sensitive layer. The special light sensitive layer is preferably sensitive to a different light wavelength then the wavelength used for accessing data on the optical recording medium. It can also be situated slightly below the cover layer of the optical recording medium. In all cases the modification of the label side results in a pattern with different optical properties, which can be detected with the optical pickup.

Advantageously, the identification mark is linked to content of the optical recording medium. Linking the identification mark to content of the optical recording medium, e.g. through a hash value of the recorded data, further improves the security of the identification mark against falsification.

According to a further aspect of the invention, a method for reading an identification mark from a label side or a data access side of an optical recording medium has the steps of:
- focusing a reading light beam onto or close to the label side or the data access side to a region outside a region of a normal focus search cycle; and
- detecting a light beam reflected by the identification mark.

A corresponding apparatus for reading an identification mark from a label side or a data access side of an optical recording medium has:
- a focusing unit for focusing a reading light beam onto or close to the label side or the data access side to a region outside a region of a normal focus search cycle; and
- a detector for detecting a light beam reflected by the identification mark.

Today's DVD and BluRay players and recorders are generally able to also read CDs, where the cover layer has a larger thickness, i.e. where the data is located much closer to the label side. According to the invention one of the light beams available in the apparatus is focused onto the identification mark on the label side or the data access side. As the structures of the identification mark are usually much larger than the data structures recorded on the optical recording medium, it is also sufficient if the light beam is focused close to the identification mark. In case the identification mark is arranged on the label side of the optical recording medium, the light beam used for reading CDs is preferably used for reading the identification mark. In case of an apparatus for reading BluRay disks or similar disks, where the data is located close to the data access side, the identification mark is advantageously located on the data access side of the optical recording medium. The blue light beam used for reading BluRay disks is then also used for reading the identification mark. Altogether it can be said that current devices do not have difficulties to detect the information on the label side and/or the data access side of the optical recording medium. Only some modification of the device firmware is necessary, which enables the device to focus the light beam to a region outside the normal focusing range, i.e. outside the region of a normal focus search cycle.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: shows a side view of a known optical recording medium,
- Fig. 2: depicts a side view of a first optical recording medium according to the invention,
- Fig. 3: shows a side view of a second optical recording medium according to the invention,
- Fig. 4: schematically illustrates an apparatus for reading from optical recording media when reading the optical recording medium of Fig. 2,
- Fig. 5: shows the apparatus of Fig. 4 when reading from the optical recording medium of Fig. 3, and
- Fig. 6: schematically depicts an apparatus for providing an optical recording medium with an identification mark.

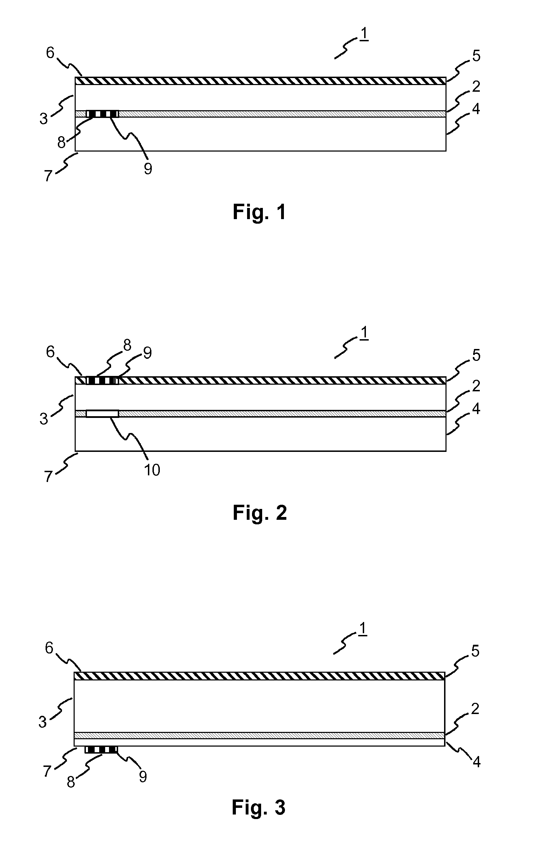

In Fig. 1 a side view of a known optical recording medium 1 is shown. The optical recording medium 1 has a recording layer 2 arranged on a transparent substrate 3 and covered by a transparent cover layer 4. The recording layer 2 is either a pre-recorded layer or a recordable layer. A label 5 is applied on the substrate 3, the substrate side of the optical recording medium 1 thus is the label side 6. Data are read by a light beam through the cover layer 4. The cover layer side of the optical recording medium 1 thus is the data access side 7. Located in an identification mark area 8 of the recording layer 2 is an identification mark 9. In Fig. 1 the recording layer 2 is located essentially at a depth of half the thickness of the optical recording medium 1. This is the case, for example, for DVDs. In the case of CDs the recording layer 2 is located close to the label side 6, whereas in case of BluRay disks the recording layer 2 is located close to the data access side 7.

A side view of a first optical recording medium 1 according to the invention is depicted in Fig. 2. In this example the identification mark area 8 and the identification mark 9 are arranged within the label 5 on the label side 6 of the optical recording medium 1. In order to enable reading of the identification mark 9 from the data access side 7, the recording layer 2 has a transparent or semi-reflective area 10, which coincides with the identification mark area 8. The identification mark 9 can be read by focusing a reading light beam through the transparent or semi-reflective area 10 onto or close to the identification mark 9. The depicted medium is similar to a DVD, except for the location of the identification mark 9.

In order to manufacture the transparent area 10, different approaches can be used. One approach is to use a spin coating process starting at the radially outer rim of the transparent area 10. Alternatively, the recording layer 2 is partially or completely removed in the region of the transparent area 10. A further possibility is to use a sputtering process for producing the recording layer 2. In this case a mask is preferably provided for shielding the region of the transparent area 10, or the region of the transparent area 10 is treated with an anti-sticking substance before the sputtering.

A side view of a second optical recording medium 1 according to the invention is illustrated in Fig. 3. In this example the recording layer 2 is located much closer to the data access side 7 of the optical recording medium 1, i.e. the substrate 3 is thicker, whereas the cover layer 4 is thinner. The identification mark area 8 and the identification mark 9 are arranged on the cover layer 4 on the data access side 7 of the optical recording medium. Of course, the identification mark area 8 and the identification mark 9 can likewise be located within the cover layer 4, as shown for the label 5 on the label side 6 in Fig. 2. The identification mark 9 is read by focusing a reading light beam onto or close to the identification mark 9. No transparent area 10 is necessary in this case. The depicted medium is similar to a BluRay disk, except for the location of the identification mark 9.

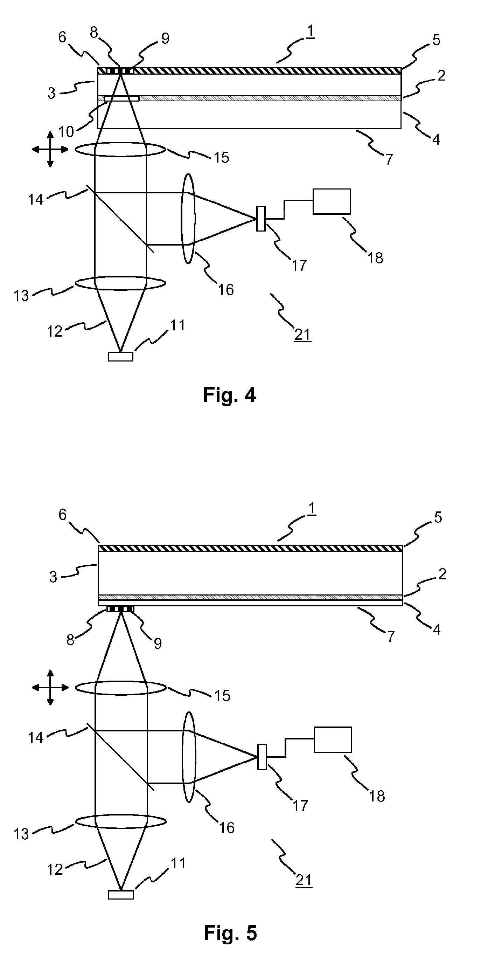

In Fig. 4 an apparatus 21 for reading from optical recording media 1 according to the invention is shown schematically. In this figure the apparatus 21 is used for reading from the optical recording medium 1 of Fig. 2. The apparatus 21 comprises a light source 11, which emits a light beam 12 for scanning the recording layer 2 of the optical recording medium 1. The light beam 12 is collimated by a collimator 13 before it passes a beam splitter 14. An objective lens 15 focuses the light beam 12 through the transparent area 10 onto the identification mark 9 in the identification mark area 8 on the label side 6 of the optical recording medium 1. The objective lens 15 can be moved relative to the optical recording medium 1 by an actuator (not shown) for ensuring that the light beam 12 is focused correctly onto or close to the identification mark 9. In contrast to a known apparatus for reading from optical recording media 1 the apparatus according to the invention is capable of focusing the light beam 12 to a region outside a region of a normal focus search cycle. Part of the light beam 12 is reflected by the identification mark 9. The reflected light is collimated by the objective lens 15, deviated by the beam splitter 14 and imaged onto a photodetector 18 by means of a further objective lens 17. The signals obtained from the photodetector 18 are fed to an evaluation unit 19, which detects the data contained in the identification mark 9. The evaluation unit 19 may additionally compare the detected identification mark 9 with content recorded on the optical recording medium 1.

Fig. 5 depicts the apparatus 21 of Fig. 4 when reading from the optical recording medium 1 of Fig. 3. In this case the objective lens 15 focuses the light beam 12 onto or close to the identification mark 9 on the cover layer 4 of the optical recording medium 1. Again the light beam 12 is focused to a region outside the region of a normal focus search cycle.

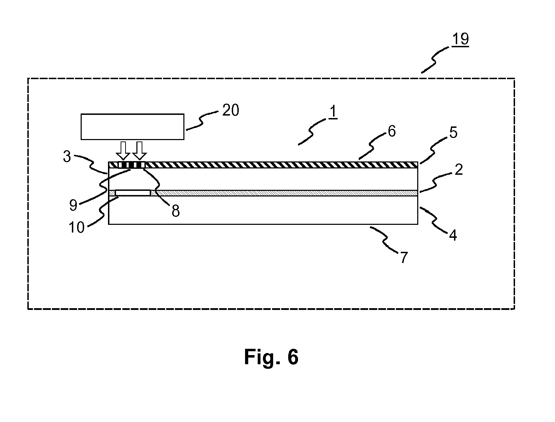

In Fig. 6 an apparatus 19 for providing an optical recording medium 1 with an identification mark 9 is illustrated schematically. The apparatus 19 includes a tool 20 for applying the identification mark 9 to the label side 6 or the data access side 7 of the optical recording medium. Depending on the type of identification mark 9 the tool 20 is, for example, a label printer, a label application unit, a tool for removing portions of a reflective layer by a mechanical pressing or scratching step, or a light source for optically modifying a special light sensitive layer.

## Claims

1. Method for providing an optical recording medium (1) having a label side (6) and a data access side (7) with an identification mark (9), **wherein** the identification mark (9) is applied to the label side (6) and/or to the data access side (7) as a pattern detectable by a light beam (12) from the data access side (7).

2. Method according to claim 1, **wherein** the identification mark (9) is applied to the label side (6) and/or to the data access side (7) by printing the pattern or by applying a pre-printed label.

3. Method according to claim 1, **wherein** the identification mark (9) is applied to the label side (6) and/or to the data access side (7) by removing portions of a reflective layer from the label side (6) or the data access side (7).

4. Method according to one of claims 1 to 3, **wherein** the identification mark (9) is linked to content of the optical recording medium (1).

5. Apparatus (19) for providing an optical recording medium (1) having a label side (6) and a data access side (7) with an identification mark (9), **characterized in that** the apparatus (19) is adapted to apply the identification mark (9) to the label side (6) and/or to the data access side (7) as a pattern detectable by a light beam (12) from the data access side (7).

6. Apparatus (19) according to claim 5, **wherein** the apparatus (19) includes a printer for printing the identification mark (9) onto the label side (6) and/or onto the data access side (7), or a label application unit for applying a pre-printed label onto the label side (6) and/or onto the data access side (7).

7. Apparatus (19) according to claim 5, **wherein** the apparatus includes a mechanism for removing portions of a reflective layer from the label side (6) and/or from the data access side (7).

8. Optical recording medium (1) having a label side (6) and a data access side (7), **characterized in that** the optical recording medium (1) has an identification mark (9) on the label side (6) and/or on the data access side (7), which is detectable by a light beam (12) from the data access side (7).

9. Optical recording medium (1) according to claim 8, **wherein** the identification mark (9) is applied to the optical recording medium (1) with a method according to one of claims 1 to 4.

10. Method for reading an identification mark (9) from a label side (6) or a data access side (7) of an optical recording medium (1), **having** the steps of:
- focusing a reading light beam (12) onto or close to the label side (6) or the data access side (7) to a region outside a region of a normal focus search cycle; and
- detecting a light beam reflected by the identification mark (9).

11. Method according to claim 10, **further** having the step of comparing a detected identification mark (9) with content recorded on the optical recording medium (1).

12. Apparatus (21) for reading an identification mark (9) from a label side (6) or a data access side (7) of an optical recording medium (1), **characterized in that** the apparatus (21) has:
- a focusing unit (15) for focusing a reading light beam (12) onto or close to the label side (6) or the data access side (7) to a region outside a region of a normal focus search cycle; and
- a detector (17) for detecting a light beam reflected by the identification mark (9).

13. Apparatus (21) according to claim 12, **further** having an evaluation unit (18) for comparing a detected identification mark (9) with content recorded on the optical recording medium (1).
